# EUROPEAN PATENT APPLICATION

(11) **EP 4 554 176 A1**
(43) Date of publication of application: **14.05.2025**
(21) Application number: 23845189.2
(22) Date of filing: 28.06.2023
(51) Int. Cl.: H04L 45/00

(54) **MESSAGE PROCESSING METHOD AND RELATED DEVICE**

(30) Priority: 28.07.2022 CN 202210901084
(71) Applicant: Huawei Technologies Co., Ltd., Shenzhen, Guangdong 518129 (CN)
(72) Inventor: ZHANG, Ka, Shenzhen, Guangdong 518129 (CN)
(74) Representative: Pfenning, Meinig & Partner mbB
(86) International application number: PCT/CN2023/103302
(87) International publication number: WO 2024/021976

(57) **Abstract**

This application discloses a packet processing method and a related device. When sending an SR policy to a headend of the SR policy, a control entity notifies the headend of a usage of the SR policy based on indication information of the SR policy. After sensing the usage of the SR policy based on the received indication information, the headend may perform corresponding operations based on different usages, to ensure that the SR policy takes effect. For example, when it is ensured that a quantity of SIDs included in a segment list in an end-to-end SR policy exceeds an MSD of a network device, an associated SR policy corresponding to the end-to-end SR policy can be effectively deployed, and a service packet can be effectively forwarded based on the end-to-end SR policy and the associated SR policy, so that bandwidth resource utilization is improved.

## Description

This application claims priority to Chinese Patent Application No. 202210901084.0, filed with the China National Intellectual Property Administration on July 28, 2022 and entitled "PACKET PROCESSING METHOD AND RELATED DEVICE", which is incorporated herein by reference in its entirety.

### TECHNICAL FIELD

This application relates to the field of communication technologies, and in particular, to a packet processing method and a related device.

### BACKGROUND

A segment routing (Segment Routing, SR) policy (policy) is a traffic steering policy, and the SR policy usually includes a color (color), an endpoint (Endpoint), and a segment list (segment list). If a destination address of a service packet matches the SR policy, the service packet may be forwarded based on a path determined based on the segment list in the SR policy.

In some scenarios, after different SR policies are delivered to a headend, the headend needs to perform differentiated processing, to ensure normal running of services or appropriate use of bandwidth resources. However, currently, a headend of an SR policy cannot perform differentiated processing on different SR policies. As a result, services cannot run normally or bandwidth resources are wasted in some scenarios.

### SUMMARY

Based on this, this application provides a packet processing method and a related device. A network device can sense a usage of an obtained SR policy, and perform differentiated processing on SR policies having different usages, to ensure that a service packet can be effectively forwarded based on the SR policy, so that bandwidth resource utilization is improved.

In this application, the SR policy may be a segment routing on IPv6 policy (Segment Routing on IPv6 policy, SRv6 policy, where IPv6 stands for Internet Protocol version 6 in English), and a SID in a segment list of the SR policy is an IPv6 address. Alternatively, the SR policy may be a segment routing on multi-protocol label switching policy (Segment Routing on Multi-Protocol Label Switching policy, SR MPLS policy), and a SID in a segment list of the SR policy is an MPLS label.

According to a first aspect, this application provides a packet processing method. In the method, a control entity generates a first message including a first SR policy and indication information, and sends the first message to a first network device, where the indication information indicates a usage of the first SR policy, and the first network device is a headend of the first SR policy. In this way, after sensing the usage of the SR policy based on the received indication information, the first network device may perform corresponding operations based on different usages, to ensure that the SR policy takes effect. For example, when it is ensured that a quantity of SIDs included in a segment list in an end-to-end SR policy exceeds a max stack depth (Max Stack Depth, MSD) of a network device, an associated SR policy corresponding to the end-to-end SR policy can be effectively deployed, and a service packet can be effectively forwarded based on the end-to-end SR policy and the associated SR policy, so that bandwidth resource utilization is improved.

The usage (which may also be referred to as type, function, or role) of the SR policy may include but is not limited to an end-to-end SR policy (namely a common SR policy), an associated SR policy (which may also be referred to as a binding (Binding) SR policy), or a protection SR policy.

In some implementations, the first SR policy is the end-to-end SR policy. In this case, the control entity may determine the end-to-end SR policy based on topology information and a SID of each network device in network information, and denote the end-to-end SR policy as the first SR policy. The indication information indicates that the usage of the first SR policy is a traffic steering SR policy. Alternatively, after determining the end-to-end SR policy based on topology information and a SID of each network device in network information, optionally, the control entity determines whether a quantity of segments (or SIDs) included in the segment list in the end-to-end SR policy is greater than a minimum value in MSDs of network devices. If the quantity of segments (or SIDs) included in the segment list in the end-to-end SR policy is not greater than the minimum value in the MSDs of the network devices, it is determined that the end-to-end SR policy does not need to be associated with another SR policy to implement traffic steering. Therefore, the end-to-end SR policy is denoted as the first SR policy. The indication information indicates that the usage of the first SR policy is a traffic steering SR policy. It should be noted that, in some scenarios, the end-to-end SR policy may not carry the indication information, and a usage of an SR policy that does not carry the indication information may be the end-to-end SR policy by default. In some other scenarios, a value of the indication information of the end-to-end SR policy may be a default value (for example, 0), and if the value of the indication information is the default value, it indicates that the usage of the SR policy is the end-to-end SR policy.

In some other implementations, the first SR policy in S101 is a related SR policy of the end-to-end SR policy. For example, the first SR policy is an associated SR policy of the end-to-end SR policy. For another example, the first SR policy is a protection SR policy of the end-to-end SR policy.

In an example, the indication information indicates that the usage of the first SR policy is an SR policy used for being associated. The first SR policy is associated with a second SR policy, a first forwarding path indicated by the first SR policy is associated with a second forwarding path indicated by the second SR policy, and the second forwarding path includes the first forwarding path. During specific implementation, the control entity may determine the end-to-end SR policy (namely the second SR policy) based on the topology information and the SID of each network device in the network information, and then determine whether the quantity of segments (or SIDs) included in the segment list in the end-to-end SR policy is greater than a minimum value in MSDs of network devices. If the quantity of segments (or SIDs) included in the segment list in the end-to-end SR policy is greater than the minimum value in the MSDs of the network devices, it is determined that at least one associated SR policy needs to be deployed for the end-to-end SR policy to implement traffic steering. In this case, the control entity may determine a truncation node (which may also be referred to as a binding node) in a network device through which the end-to-end SR policy passes, and determine the associated SR policy (for example, the first SR policy) based on the truncation node.

In another example, the indication information indicates that the usage of the first SR policy is an SR policy for protection. The first SR policy protects a second SR policy, and a first forwarding path indicated by the first SR policy is a protection path of a second forwarding path indicated by the second SR policy. During specific implementation, the control entity may determine the end-to-end SR policy (namely the second SR policy) based on the topology information and the SID of each network device in the network information, and then design, based on a requirement, a protection path for all or a part of a forwarding path indicated by the end-to-end SR policy, and calculate at least one protection SR policy (for example, the first SR policy) corresponding to the protection path.

In some implementations, the method provided in this application may further include: The control entity receives a binding segment identifier (Binding Segment Identifier, BSID) sent by the first network device, where the BSID identifies the first SR policy. In this way, the control entity may send the second SR policy to a second network device, where the second SR policy includes the BSID. In an example, if the usage of the first SR policy is the associated SR policy, the first network device definitely needs to apply for a BSID for the first SR policy and report the BSID to the control entity. The control entity uses the BSID to replace the SID in the segment list that is in the second SR policy and that corresponds to the first SR policy, and sends an updated second SR policy to a headend, namely the second network device, of the second SR policy, so that the end-to-end SR policy can normally perform traffic steering. In another example, if the usage of the first SR policy is the protection SR policy, the first network device may apply for a BSID for the first SR policy and report the BSID to the control entity. When sending the second SR policy to a headend, namely the second network device, of the second SR policy, the control entity sends the BSID for identifying the first SR policy, so that when a path protected by the first SR policy is faulty or congested, the second network device can enable the second SR policy as an active path or a part of the active path based on the BSID.

In some implementations, before the first message is generated, the method may further include: The control entity obtains network information, where the network information includes topology information of a network, a max stack depth of each network device in the network, and a segment identifier SID of each network device in the network; and the control entity determines the first SR policy based on the network information. In this way, the control entity can perform path computation based on the network information to obtain an SR policy having at least one usage, to prepare for delivering the SR policy to a forwarding plane to guide forwarding of the service packet.

In some implementations, the first message may be a border gateway protocol (Border Gateway Protocol, BGP) SR policy packet, and the indication information is carried in a sub-type length value Sub-TLV of the BGP SR policy packet.

In some other implementations, the first message may be a path computation element protocol (Path Calculation Element Protocol, PCEP) packet, and the indication information is carried in a TLV of SR policy association information (association information) in the PCEP packet.

According to a second aspect, this application further provides a packet processing method. The method is applied to a first network device, and may include: receiving a first message sent by a control entity, where the first message includes a first segment routing policy SR policy and first indication information, the first indication information indicates that a usage of the first SR policy is an SR policy used for being associated, a first forwarding path indicated by the first SR policy is associated with a second forwarding path indicated by a second SR policy, and the second forwarding path includes the first forwarding path; and the first network device sends state information to the control entity based on the first indication information after a binding segment identifier BSID of the first SR policy is successfully applied for, where the BSID identifies the first SR policy, and the state information indicates a state of the first SR policy.

In some implementations, the method may further include: The first network device receives a first service packet sent by a second network device, where the first service packet includes a second segment list in the second SR policy, the second segment list includes the BSID, and the second network device is a headend of the second SR policy; the first network device encapsulates, based on the BSID, a first segment list included in the first SR policy into the first service packet, to obtain a second service packet; and the first network device forwards the second service packet based on the first segment list. In this way, the service packet can be normally forwarded based on the second SR policy, to implement normal running of a service in a network.

In some implementations, the method may further include: The first network device skips, based on the first indication information, an operation of reporting an alarm related to the first SR policy. It can be learned that, in this application, unnecessary alarms can be adaptively reduced based on the indication information indicating the usage of the SR policy. This not only saves network resources, but also improves alarm processing efficiency in a context of a large quantity of alarms being difficult to be analyzed and processed, thereby contributing to network security.

In some implementations, that the first network device receives the first message sent by the control entity may include: The first network device receives a BGP SR policy packet sent by the control entity.

In some other implementations, that the first network device receives the first message sent by the control entity may include: The first network device receives a PCEP packet sent by the control entity.

In some implementations, that the first network device sends the state information to the control entity may include: The first network device sends a BGP link state (Link State, LS) packet to the control entity, where the BGP LS packet includes the state information.

In an example, the BGP LS packet may further include second indication information, the second indication information is associated with the first indication information, and the second indication information indicates that the usage of the first SR policy is the SR policy used for being associated. The second indication information may be carried in a TLV in SR policy state TLVs in the BGP LS packet.

It should be noted that, for a specific implementation and achieved technical effect of the packet processing method in the second aspect, refer to the related descriptions of the first aspect.

According to a third aspect, this application further provides a packet processing apparatus. The apparatus is used in a control entity, and may include a processing unit and a sending unit. The processing unit is configured to generate a first message, where the first message includes a first segment routing policy SR policy and indication information, and the indication information indicates a usage of the first SR policy. The sending unit is configured to send the first message to a first network device.

In some implementations, the indication information indicates that the usage of the first SR policy is an SR policy used for being associated. The first SR policy is associated with a second SR policy, a first forwarding path indicated by the first SR policy is associated with a second forwarding path indicated by the second SR policy, and the second forwarding path includes the first forwarding path.

In some other implementations, the indication information indicates that the usage of the first SR policy is an SR policy for protection. The first SR policy protects a second SR policy, and a first forwarding path indicated by the first SR policy is a protection path of a second forwarding path indicated by the second SR policy.

In some implementations, the apparatus may further include a receiving unit. The receiving unit is configured to receive a binding segment identifier BSID sent by the first network device, where the BSID identifies the first SR policy. The sending unit is further configured to send the second SR policy to a second network device, where the second SR policy includes the BSID.

In some implementations, the processing unit is further configured to: obtain network information before generating the first message, where the network information includes topology information of a network, a max stack depth of each network device in the network, and a segment identifier SID of each network device in the network; and determine the first SR policy based on the network information.

In some implementations, the first message is a BGP SR policy packet. In this case, the indication information is carried in a sub-type length value Sub-TLV of the BGP SR policy packet.

In some other implementations, the first message is a PCEP packet. In this case, the indication information is carried in a TLV of SR policy association information in the PCEP packet.

It should be noted that, for a specific implementation and achieved technical effect of the apparatus provided in this application, refer to the method provided in the first aspect.

According to a fourth aspect, this application further provides a packet processing apparatus. The apparatus is used in a first network device, and may include a receiving unit and a sending unit. The receiving unit is configured to receive a first message sent by a control entity, where the first message includes a first segment routing policy SR policy and first indication information, the first indication information indicates that a usage of the first SR policy is an SR policy used for being associated, a first forwarding path indicated by the first SR policy is associated with a second forwarding path indicated by a second SR policy, and the second forwarding path includes the first forwarding path. The sending unit is configured to send state information to the control entity based on the first indication information after a binding segment identifier BSID of the first SR policy is successfully applied for, where the BSID identifies the first SR policy, and the state information indicates a state of the first SR policy.

In some implementations, the apparatus further includes a processing unit. The receiving unit is further configured to receive a first service packet sent by a second network device, where the first service packet includes a second segment list in the second SR policy, the second segment list includes the BSID, and the second network device is a headend of the second SR policy. The processing unit is configured to encapsulate, based on the BSID, a first segment list included in the first SR policy into the first service packet, to obtain a second service packet. The sending unit is further configured to forward the second service packet based on the first segment list.

In some implementations, the apparatus further includes a processing unit. The processing unit is configured to skip, based on the first indication information, an operation of reporting an alarm related to the first SR policy.

In some implementations, the receiving unit is specifically configured to receive a BGP SR policy packet sent by the control entity.

In some other implementations, the receiving unit is specifically configured to receive a PCEP packet sent by the control entity.

In some implementations, the sending unit is specifically configured to send a BGP LS packet to the control entity, where the BGP LS packet includes the state information.

In some implementations, the BGP LS packet further includes second indication information, the second indication information is associated with the first indication information, and the second indication information indicates that the usage of the first SR policy is the SR policy used for being associated. The second indication information is carried in a TLV in SR policy state TLVs in the BGP LS packet.

It should be noted that, for a specific implementation and achieved technical effect of the apparatus provided in this application, refer to the method provided in the second aspect.

According to a fifth aspect, this application provides a network device. The network device includes a processor and a memory, the memory is configured to store instructions or program code, and the processor is configured to invoke the instructions or the program code from the memory and run the instructions or the program code, to perform the method according to any one of the second aspect or the possible implementations of the second aspect.

According to a sixth aspect, this application provides a control entity. The control entity includes a processor and a memory, the memory is configured to store instructions or program code, and the processor is configured to invoke the instructions or the program code from the memory and run the instructions or the program code, to perform the method according to any one of the first aspect or the possible implementations of the first aspect.

According to a seventh aspect, this application provides a communication system. The communication system may include a first network device and a control entity, the control entity is configured to perform the method according to any one of the first aspect or the possible implementations of the first aspect, and the first network device is configured to perform the method according to any one of the second aspect or the possible implementations of the second aspect. The first network device may be the packet processing apparatus provided in the fourth aspect, and the control entity may be the packet processing apparatus provided in the third aspect; or the first network device may be the network device provided in the fifth aspect, and the control entity may be the control entity provided in the sixth aspect.

According to an eighth aspect, this application provides a computer-readable storage medium, including instructions, a program, or code. When the instructions, the program, or the code is executed on a computer, the computer is enabled to perform the method according to any one of the first aspect or the possible implementations of the first aspect, or the method according to any one of the second aspect or the possible implementations of the second aspect.

According to a ninth aspect, this application provides a computer program product. When the computer program product runs on a network device, the network device is enabled to perform the method according to any one of the first aspect or the possible implementations of the first aspect, or the method according to any one of the second aspect or the possible implementations of the second aspect.

### BRIEF DESCRIPTION OF DRAWINGS

FIG. 1 is a diagram of a network scenario according to this application;
FIG. 2 is a diagram of a packet processing method in a network shown in FIG. 1 according to this application;
FIG. 3 is a schematic flowchart of a packet processing method 100 according to this application;
FIG. 4 is a diagram of a format in which a BGP SR policy packet carries first indication information according to this application;
FIG. 5 is a diagram of a format in which a PCEP packet carries first indication information according to this application;
FIG. 6 is a diagram of a format in which a BGP LS packet carries third indication information according to this application;
FIG. 7 is still another diagram of the packet processing method in the network shown in FIG. 1 according to this application;
FIG. 8 is a diagram of a structure of another packet processing apparatus 800 according to this application;
FIG. 9 is a diagram of a structure of still another packet processing apparatus 900 according to this application;
FIG. 10 is a diagram of a structure of a network device 1000 according to this application;
FIG. 11 is a diagram of a structure of another network device 1100 according to this application; and
FIG. 12 is a diagram of a structure of a communication system 1200 according to this application.

### DESCRIPTION OF EMBODIMENTS

SR is a protocol designed based on a concept of source routing for forwarding service packets on a network. In an SR technology, a segment routing header (Segment Routing Header, SRH) is inserted into a service packet, and an explicit segment list is pushed into the SRH. An intermediate node continuously updates a destination address and an offset address indicating a segment identifier (Segment Identifier, SID) in the segment list to complete hop-by-hop forwarding. An SR policy is usually a traffic steering policy in an SR protocol, and usually uses <Headpoint, color, endpoint> or <color, endpoint> to globally uniquely identify the SR policy. The SR policy may include a plurality of candidate paths (Candidate Paths), each of the candidate paths may be associated with a plurality of segment lists, each of the segment lists includes a plurality of segments, and each of the segments is a SID.

With a continuous increase of requirements, the SR policy has other usages in addition to traffic steering. For example, in some scenarios, a quantity of SIDs included in a segment list in an end-to-end SR policy may exceed a max stack depth (Max Stack Depth, MSD) of a network device. To further perform traffic steering strictly based on the end-to-end SR policy, a truncation node is usually determined from nodes through which the end-to-end SR policy passes, and an associated SR policy (which may also be referred to as a binding SR policy) is sent to the truncation node. A segment list of the associated SR policy may be a part of the segment list of the end-to-end SR policy, and may be specifically a truncation node and a part posterior to the truncation node in the segment list of the end-to-end SR policy. The associated SR policy is used only for the truncation node, and is not directly used for traffic steering. For another example, in some other scenarios, to improve network reliability, a protection SR policy may be further configured for an active SR policy. A protection path indicated by the protection SR policy can take over, when the active SR policy is faulty, a service on a path indicated by the active SR policy, to ensure normal running of the service.

The network device cannot sense usages of obtained SR policies, and does not perform differentiated processing on different received SR policies based on different usages. As a result, services cannot run normally or bandwidth resources are wasted in some scenarios. The following uses the end-to-end SR policy and the associated SR policy as examples to describe the existing problems.

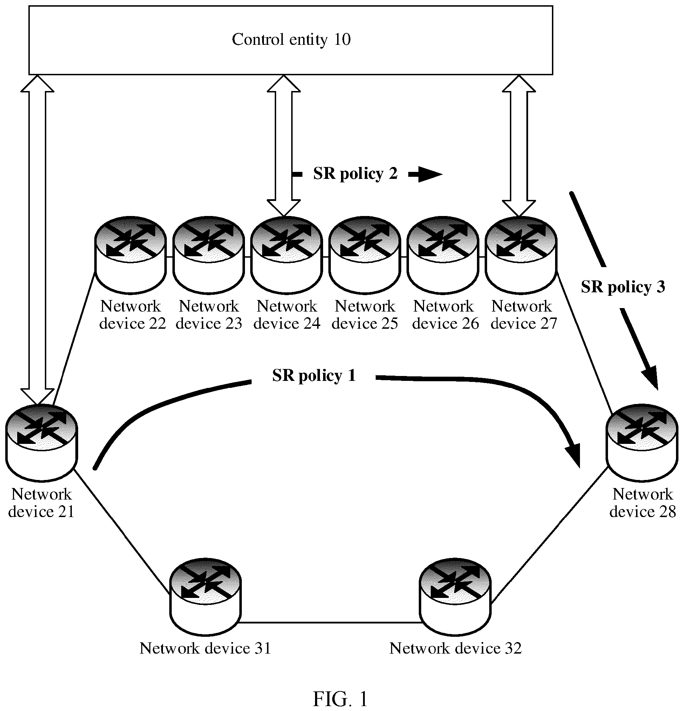

For example, a network shown in FIG. 1 may include a control entity 10, a network device 21, a network device 22, a network device 23, a network device 24, a network device 25, a network device 26, a network device 27, and a network device 28, and may further include a network device 31 and a network device 32. The control entity 10 is configured to control the network device in the network. For example, a path computation process of the control entity 10 may include the following steps. S11: When computing an end-to-end path from the network device 21 to the network device 28, the control entity 10 obtains an end-to-end SR policy 1, an associated SR policy 2, and an associated SR policy 3. The SR policy 1 is an SR policy corresponding to a forwarding path 1 from the network device 21 to the network device 28. The SR policy 2 is an SR policy corresponding to a forwarding path 2 from the network device 24 to the network device 26. The SR policy 3 is an SR policy corresponding to a forwarding path 3 from the network device 27 to the network device 28. S12: The control entity 10 sends the SR policy 2 to the network device 24, and sends the associated SR policy 3 to the network device 27. If the associated SR policy needs to play a function, the network device that receives the associated SR policy needs to apply for a binding segment identifier (Binding Segment Identifier, BSID) that identifies the associated SR policy, and report the BSID to the control entity 10; and the control entity 10 replaces, in the end-to-end SR policy with the BSID, a SID of a network device on an associated path corresponding to the associated SR policy, to ensure that the associated SR policy is effective, and resolve a forwarding problem existing when the quantity of SIDs included in the segment list in the end-to-end SR policy exceeds the MSD of the network device.

Currently, in a case, after S12, after the network device 24 receives the SR policy 2 and installs the forwarding path 2 indicated by the SR policy 2, because the network device 24 does not learn that the SR policy 2 is an associated SR policy of the SR policy 1, the network device 24 does not perform an operation of applying for a BSID for the SR policy 2, but directly reports a state to the control entity 10. If the control entity 10 does not obtain, from the state reported by the network device 24, the BSID indicating the SR policy 2, it is considered that the network device 24 cannot successfully apply for the BSID corresponding to the SR policy 2, and thus it is determined that path computation for the SR policy 1 fails. As a result, traffic steering cannot be performed for a service based on the SR policy 1. Alternatively, after the network device 27 receives the SR policy 3 and installs the forwarding path 3 indicated by the SR policy 3, because the network device 27 does not learn that the SR policy 3 is an associated SR policy of the SR policy 1, the network device 27 does not perform an operation of applying for a BSID for the SR policy 3, but directly reports a state to the control entity 10. If the control entity 10 does not obtain, from the state reported by the network device 27, the BSID indicating the SR policy 3, it is considered that the network device 27 cannot successfully apply for the BSID corresponding to the SR policy 3, and thus it is determined that path computation for the SR policy 1 fails. As a result, traffic steering cannot be performed for a service based on the SR policy 1. In this case, because the network device cannot sense the usage of the obtained SR policy, the network device does not perform differentiated processing on different received SR policies based on different usages. As a result, an end-to-end service cannot run normally.

In another case, after S12, after receiving the SR policy 2 and installing the forwarding path 2 indicated by the SR policy 2, the network device 24 applies for a BSID for the SR policy 2. Applying for the BSID takes time. However, because the network device 24 cannot sense a usage of the SR policy 2, the network device 24 does not wait for successful application for the BSID before reporting a state to the control entity 10, but starts to report a state after the forwarding path 2 indicated by the SR policy 2 is installed. If the control entity 10 does not obtain, from the state reported by the network device 24, the BSID indicating the SR policy 2, or the control entity 10 does not obtain, within preset duration from states reported by the network device 24 for a plurality of times, the BSID indicating the SR policy 2, it is considered that the network device 24 cannot successfully apply for the BSID corresponding to the SR policy 2, and thus it is determined that path computation for the SR policy 1 fails. As a result, traffic steering cannot be performed for a service based on the SR policy 1. Alternatively, after receiving the SR policy 3 and installing the forwarding path 3 indicated by the SR policy 3, the network device 27 applies for a BSID for the SR policy 3. Applying for the BSID takes time. However, because the network device 27 cannot sense a usage of the SR policy 3, the network device 27 does not wait for successful application for the BSID before reporting a state to the control entity 10, but starts to report a state after the forwarding path 3 indicated by the SR policy 3 is installed. If the control entity 10 does not obtain, from the state reported by the network device 27, the BSID indicating the SR policy 3, or the control entity 10 does not obtain, within preset duration from states reported by the network device 27 for a plurality of times, the BSID indicating the SR policy 3, it is considered that the network device 27 cannot successfully apply for the BSID corresponding to the SR policy 3, and thus it is determined that path computation for the SR policy 1 fails. As a result, traffic steering cannot be performed for a service based on the SR policy 1. In this case, because the network device cannot sense the usage of the obtained SR policy, the network device does not perform differentiated processing on different received SR policies based on different usages. As a result, an end-to-end service cannot run normally, and interaction between the control entity and the network device is frequent and invalid, which wastes network resources such as bandwidth resources.

Based on this, an embodiment of this application provides a packet processing method. When sending an SR policy to a headend of the SR policy, a control entity notifies the headend of a usage of the SR policy based on indication information of the SR policy. After sensing the usage of the SR policy based on the received indication information, the headend may perform corresponding operations based on different usages, to ensure that the SR policy takes effect. For example, when it is ensured that a quantity of SIDs included in a segment list in an end-to-end SR policy exceeds an MSD of a network device, an associated SR policy corresponding to the end-to-end SR policy can be effectively deployed, and a service packet can be effectively forwarded based on the end-to-end SR policy and the associated SR policy, so that bandwidth resource utilization is improved.

The usage (which may also be referred to as a type, a function, or a role) of the SR policy may include but is not limited to an end-to-end SR policy (namely a common SR policy), an associated SR policy (which may also be referred to as a binding (Binding) SR policy), or a protection SR policy.

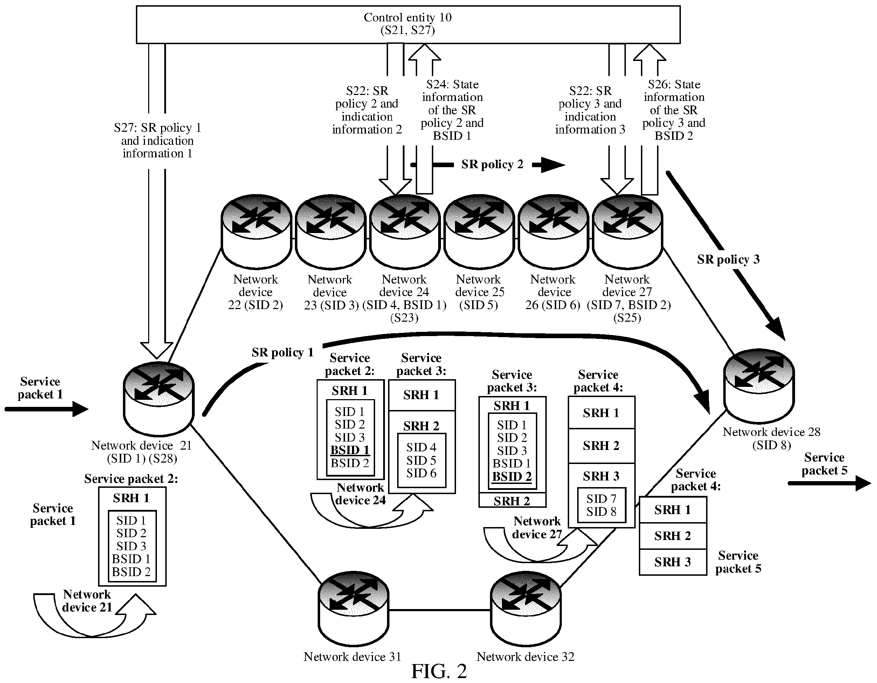

The network shown in FIG. 1 is still used as an example to describe the end-to-end SR policy and the associated SR policy in this embodiment of this application. A path computation process of a control entity 10 is shown in FIG. 2. For example, the path computation process may include the following steps. S21: When computing an end-to-end path from a network device 21 to a network device 28, the control entity 10 obtains an end-to-end SR policy 1, an associated SR policy 2, and an associated SR policy 3. The SR policy 1 is an SR policy corresponding to a forwarding path 1 from the network device 21 to the network device 28. The SR policy 2 is an SR policy corresponding to a forwarding path 2 from the network device 24 to the network device 26. The SR policy 3 is an SR policy corresponding to a forwarding path 3 from the network device 27 to the network device 28. S22: The control entity 10 sends the SR policy 2 and indication information 2 to the network device 24, and sends the associated SR policy 3 and indication information 3 to the network device 27. The indication information 2 indicates that a usage of the SR policy 2 is the associated SR policy, and the indication information 3 indicates that a usage of the SR policy 3 is the associated SR policy. S23: After receiving the SR policy 2 and the indication information 2, the network device 24 determines, based on the indication information 2, that the usage of the SR policy 2 is the associated SR policy, and applies for a BSID for the SR policy 2, for example, applies for a BSID for the SR policy 2 from a local resource pool. S24: After installing the forwarding path 2 indicated by the SR policy 2 and successfully applying for a BSID 1 for the SR policy 2, the network device 24 reports a state to the control entity 10, where a packet for reporting the state includes the BSID 1 in addition to state information of the SR policy 2. Similarly, S25: After receiving the SR policy 3 and the indication information 3, the network device 27 determines, based on the indication information 3, that the usage of the SR policy 3 is the associated SR policy, and applies for a BSID for the SR policy 3. S26: After installing the forwarding path 3 indicated by the SR policy 3 and successfully applying for a BSID 2 for the SR policy 3, the network device 27 reports a state to the control entity 10, where a packet for reporting the state includes the BSID 2 in addition to state information of the SR policy 3. In this case, the process further includes the following steps. S27: The control entity 10 fills in the SR policy 1 with the BSID 1 identifying the SR policy 2 and the BSID 2 identifying the SR policy 3, and sends the SR policy 1 and indication information 1 to the network device 21, where the indication information 1 indicates that the SR policy 1 is the end-to-end SR policy. S28: The network device 21 installs, based on the indication information 1, the forwarding path 1 indicated by the SR policy 1. It should be noted that a sequence of performing steps S23 and S24 and steps S25 and S26 is not limited. Steps S23 and S24 may be performed before steps S25 and S26, or steps S25 and S26 may be performed before steps S23 and S24, or steps S23 and S24 and steps S25 and S26 may be performed simultaneously.

A segment list 0 in the SR policy 1 obtained by the control entity through computation in S11 or S21 may include <SID 1, SID 2, SID 3, SID 4, SID 5, SID 6, SID 7, SID 8>. A segment list 1 in the SR policy 1 sent to the network device 21 may include <SID 1, SID 2, SID 3, BSID 1, BSID 2>, where the SID 1, the SID 2, and the SID 3 respectively identify the network device 21, the network device 22, and the network device 23. A segment list 2 in the SR policy 2 sent to the network device 24 may include <SID 4, SID 5, SID 6>, where the SID 4, the SID 5, and the SID 6 respectively identify the network device 24, the network device 25, and the network device 26. A segment list 3 in the SR policy 3 sent to the network device 27 may include <SID 7, SID 8>, where the SID 7 and the SID 8 respectively identify the network device 27 and the network device 28. After successfully applying for the BSID 1, the network device 24 may locally store a correspondence between the BSID 1 and the SR policy 2. After successfully applying for the BSID 2, the network device 27 may locally store a correspondence between the BSID 2 and the SR policy 3.

The control entity sends the SR policy and the indication information to the headend of the SR policy. In a case, the indication information may be a part of the SR policy. For example, the indication information may be a policy type (Policy Type) or a policy role (Policy Role) added to an encapsulation structure of the SR policy, and the policy type or the policy role may be added after a policy name (Policy Name) of the original encapsulation structure of the SR policy. For example, the encapsulation structure of the SR policy in this embodiment of this application may be as follows:

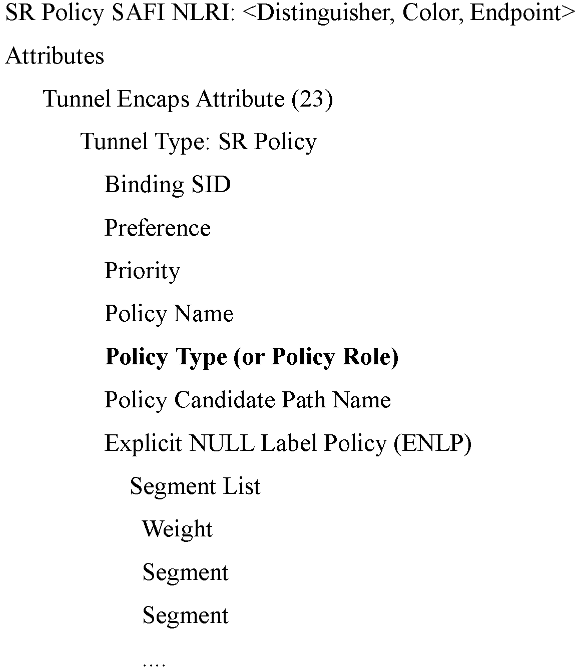

The distinguisher is an identifier of network layer reachability information (Network Layer Reachability Information, NLRI) that carries the SR policy, and indicates that content carried in the NLRI is the SR policy. The preference indicates a priority of a candidate path. In a plurality of candidate paths in the SR policy, a candidate path with a highest priority is used as an active path of the SR policy, and another candidate path in the SR policy is a backup path of the active path. The weight indicates a weight of a segment list in a candidate path. Load sharing may be performed based on a weight of a segment list between at least one segment list in a candidate path used as an active path. The segment list in the SR policy mentioned in this embodiment of this application is the segment list in the candidate path that is in the SR policy and that is used as the active path.

In another case, the indication information may be a part other than the SR policy, and does not belong to the SR policy. The indication information may further include information that indicates an SR policy whose usage is indicated by the indication information. For example, the indication information 1 may include information 11 and information 12, where the information 11 indicates that the usage of the SR policy is the end-to-end SR policy, and the information 12 indicates that the SR policy whose usage is indicated as the end-to-end SR policy is the SR policy 1. Similarly, the indication information 2 may include information 21 and information 22, where the information 21 indicates that the usage of the SR policy is the associated SR policy, and the information 22 indicates that the SR policy whose usage is indicated as the associated SR policy is the SR policy 2. The indication information 3 may include information 31 and information 32, where the information 31 indicates that the usage of the SR policy is the associated SR policy, and the information 32 indicates that the SR policy whose usage is indicated as the associated SR policy is the SR policy 3.

As shown in FIG. 2, after S28, a process of forwarding a service packet in the network may include, for example, the following steps. S31: After receiving a service packet 1, the network device 21 determines, based on a destination address of the service packet 1, that the service packet 1 needs to enter the SR policy 1 for forwarding, and encapsulates, based on the SR policy 1, an SRH 1 in the service packet 1 to obtain a service packet 2, where the SRH 1 may include the segment list 1: <SID 1, SID 2, SID 3, BSID 1, BSID 2>, or the SRH 1 may include a segment list 1': <SID 2, SID 3, BSID 1, BSID 2>. S32: The network device 21 sends the service packet 2 to the network device 24 through the network device 22 indicated by the SID 2 and the network device 23 indicated by the SID 3. S33: The network device 24 parses the service packet 2 to determine that a value of a segment left (segment left, SL) field in the SRH 1 points to the BSID 1 and determine that the BSID 1 indicates the SR policy 2, and encapsulates, based on the SR policy 2, an SRH 2 in the service packet 2 to obtain a service packet 3, where the SRH 2 may include the segment list 2: <SID 4, SID 5, SID 6>, or the SRH 2 may include a segment list 2': <SID 5, SID 6>. S34: The network device 24 sends the service packet 3 to the network device 27 through the network device 25 indicated by the SID 5 and the network device 26 indicated by the SID 6. S35: The network device 27 parses the service packet 3 to determine that the value of the SL field in the SRH 1 points to the BSID 2 and determine that the BSID 2 indicates the SR policy 3, and encapsulates, based on the SR policy 3, an SRH 3 in the service packet 3 to obtain a service packet 4, where the SRH 3 may include the segment list 3: <SID 7, SID 8>, or the SRH 3 may include a segment list 3': <SID 8>. S36: The network device 27 sends the service packet 4 to the network device 28 indicated by the SID 8. S37: The network device 28, as an egress node of the SR policy 1, may decapsulate the service packet 4 (for example, remove the SRH 1, the SRH 2, and the SRH 3) based on the SR policy 1 to obtain a service packet 5, and continue to forward the service packet 5 based on a destination address of the service packet 5.

It can be learned that according to the method provided in this embodiment of this application, when receiving the SR policy, the network device receives the indication information indicating the usage of the SR policy, and performs corresponding processing based on the usage of the received SR policy. For example, for the received associated SR policy, the state is reported to the control entity only after the BSID is successfully applied for. This can not only ensure normal running of an end-to-end service, but also save network resources such as bandwidth resources. In addition, this ensures normal running of services in the network in subsequent service forwarding processes involving different SR policies.

It should be noted that, in embodiments of this application, the SR policy may be a segment routing on IPv6 (Segment Routing on IPv6, SRv6) policy, and the SID or the BSID in the segment list is in a form of IPv6 address. Alternatively, the SR policy may be a segment routing on multi-protocol label switching (Segment Routing on Multi-Protocol Label Switching, SR MPLS) policy, and the SID or the BSID in the segment list is an MPLS label.

It should be noted that, in embodiments of this application, the SR policy indicates a forwarding path, the SR policy is directly used at some parts to indicate the forwarding path indicated by the SR policy, and "the SR policy" may be understood as "the forwarding path indicated by the SR policy".

It should be noted that the network device and the node in embodiments of this application have a same meaning, and may be alternately understood and used. The network device may be a communication device that has a packet forwarding function, like a switch, a router, a virtual routing device, or a virtual forwarding device. For example, the network device 21 and the network device 28 in FIG. 1 may be provider edge (Provider Edge, PE) devices, and the network device 22, the network device 23, the network device 24, the network device 25, the network device 26, and the network device 27 may be provider (Provider, P) devices. The control entity may be a controller or another entity having a path computation function. For example, the control entity 10 may be a path computation element (Path Calculation Element, PCE), and the network device 21, the network device 24, and the network device 27 may include a path computation client (Path Calculation Client, PCC) that may communicate with the PCE.

The foregoing describes embodiments of this application in a form of scenario embodiments. The following describes specific implementations of embodiments of this application in detail with reference to the accompanying drawings.

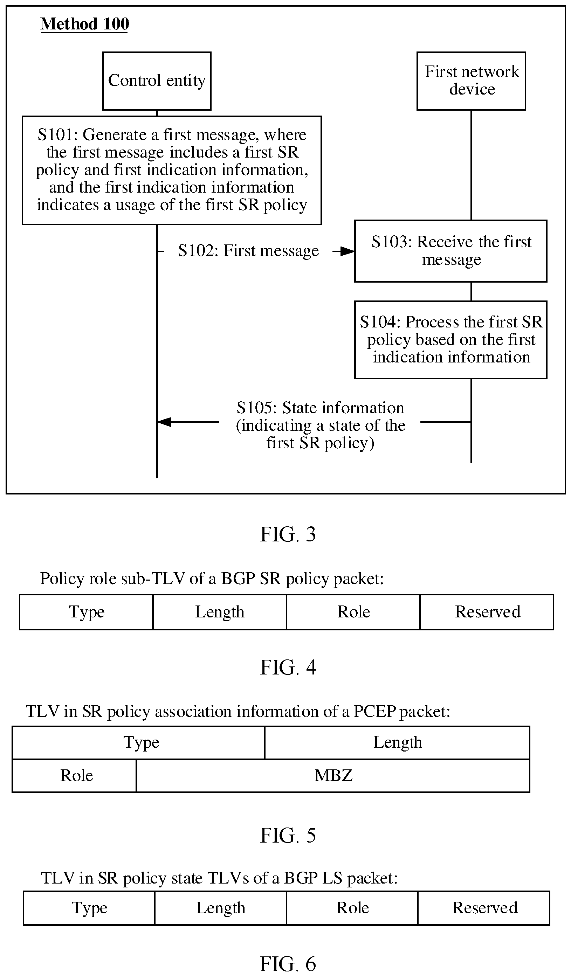

FIG. 3 is a schematic flowchart of a packet processing method 100 according to an embodiment of this application. In the method 100, for ease of understanding and description, an interaction manner between a first network device and a control entity is used for description. The first network device may correspond to the network device 24 or the network device 27 in the network shown in FIG. 1 or FIG. 2, and the control entity may correspond to the control entity 10 in the network shown in FIG. 1 or FIG. 2.

As shown in FIG. 3, the method 100 may include, for example, the following S101 to S105.

S101: The control entity generates a first message, where the first message includes a first SR policy and first indication information, and the first indication information indicates a usage of the first SR policy.

S102: The control entity sends the first message to the first network device.

S103: The first network device receives the first message sent by the control entity.

The first network device is a headend of the first SR policy.

In an example, the control entity may be an independent entity device. In this case, after generating the first SR policy, the control entity may send the first SR policy to the first network device. For example, the control entity is an independently deployed PCE, the first network device includes a PCC, and the first network device is the headend of the first SR policy. In this case, for example, S101 to S103 may include: The PCE generates and sends a first message to the PCC of the first network device, where the first message includes a first SR policy and first indication information, and the first network device obtains the first SR policy and the first indication information by receiving and parsing the first message.

In another example, the control entity may be a module integrated in the first network device. In this case, that the control entity sends the first message to the first network device in S102 may be understood as data exchange between internal modules in the first network device. For example, a PCE and a PCC are deployed in the first network device, and the first network device is the headend of the first SR policy. In this case, for example, S101 to S103 may include: The PCE of the first network device generates and sends a first message to the PCC, where the first message includes a first SR policy and first indication information, and the PCC in the first network device obtains the first SR policy and the first indication information by receiving and parsing the first message.

The following uses a scenario in which the control entity and the first network device are separately deployed as an example for description.

It may be understood that, before path computation, the control entity may first collect related information in a network, and perform path computation based on the collected related information. In an example, before S101, the method 100 may further include the following steps. S100a: The control entity obtains network information, where the network information may include, for example, topology information of a network, an MSD of each network device in the network, and a SID of each network device in the network. S100b: The control entity determines the first SR policy based on the network information. Then, the control entity generates, based on the first SR policy and the usage of the first SR policy, the first message including the first SR policy and the first indication information, namely S101.

For example, S100a may include: Each network device in the network reports the topology information of the network, the MSD of the network device, and the SID of the network device by using a border gateway protocol (Border Gateway Protocol, BGP) link state (Link State, LS) packet; and after receiving the BGP LS packet of each network device, the control entity obtains the network information by parsing the BGP LS packet.

In some implementations, the first SR policy in S101 is an end-to-end SR policy. In this case, for example, S100b may include: The control entity determines the end-to-end SR policy based on the topology information and the SID of each network device in the network information, and denotes the end-to-end SR policy as the first SR policy. The first indication information indicates that the usage of the first SR policy is a traffic steering SR policy. Then, S101 is performed. Alternatively, for S100b, after determining the end-to-end SR policy based on the topology information and the SID of each network device in the network information, optionally, the control entity determines whether a quantity of segments (or SIDs) included in a segment list in the end-to-end SR policy is greater than a minimum value in MSDs of network devices. If the quantity of segments (or SIDs) included in the segment list in the end-to-end SR policy is not greater than the minimum value in the MSDs of the network devices, it is determined that the end-to-end SR policy does not need to be associated with another SR policy to implement traffic steering, and thus the end-to-end SR policy is denoted as the first SR policy. The first indication information indicates that the usage of the first SR policy is a traffic steering SR policy. Then, S101 is performed. It should be noted that, in some scenarios, the end-to-end SR policy may not carry the first indication information, and a usage of an SR policy that does not carry the first indication information may be the end-to-end SR policy by default. In some other scenarios, a value of the first indication information of the end-to-end SR policy may be a default value (for example, 0), and if the value of the first indication information is the default value, it indicates that the usage of the SR policy is the end-to-end SR policy.

In some other implementations, the first SR policy in S101 is a related SR policy of the end-to-end SR policy. For example, the first SR policy is an associated SR policy of the end-to-end SR policy. For another example, the first SR policy is a protection SR policy of the end-to-end SR policy. An example in which the first SR policy is the associated SR policy of the end-to-end SR policy is used. For example, S100b may include: The control entity determines the end-to-end SR policy based on the topology information and the SID of each network device in the network information, and then determines whether a quantity of segments (or SIDs) included in a segment list in the end-to-end SR policy is greater than a minimum value in MSDs of network devices. If the quantity of segments (or SIDs) included in the segment list in the end-to-end SR policy is greater than the minimum value in the MSDs of the network devices, it is determined that at least one associated SR policy needs to be deployed for the end-to-end SR policy to implement traffic steering. In this case, the control entity may determine a truncation node in a network device through which the end-to-end SR policy passes, and determine the associated SR policy based on the truncation node. The network shown in FIG. 1 is used as an example. When determining that a quantity of segments (or SIDs) included in a segment list 0 in an end-to-end SR policy 1 is greater than the minimum value in the MSDs of the network devices, the control entity 10 determines the network device 24 and the network device 27 as truncation nodes, determines an SR policy 2 based on the network device 24, and determines an SR policy 3 based on the network device 27.

In an example, the first indication information indicates that the usage of the first SR policy is an SR policy used for being associated. If the first SR policy is associated with a second SR policy, a first forwarding path indicated by the first SR policy is associated with a second forwarding path indicated by the second SR policy, and the second forwarding path includes the first forwarding path.

For example, in addition to indicating the usage of the first SR policy, the first indication information further indicates that an SR policy related to the usage of the first SR policy is the second SR policy. In this case, the control entity may determine, based on the first indication information, that the usage of the first SR policy is the SR policy used for being associated and an SR policy associated with the first SR policy is the second SR policy.

For another example, the first indication information indicates the usage of the first SR policy, second indication information indicates that the second indication is related to the first indication information, and the second indication information indicates the second SR policy. In this case, the control entity may determine, based on the first indication information, that the usage of the first SR policy is the SR policy used for being associated, and may determine, based on the second indication information, that an SR policy associated with the first SR policy is the second SR policy.

In another example, the first indication information indicates that the usage of the first SR policy is an SR policy for protection. If the first SR policy protects a second SR policy, a first forwarding path indicated by the first SR policy is a protection path of a second forwarding path indicated by the second SR policy.

For example, in addition to indicating the usage of the first SR policy, the first indication information further indicates that an SR policy related to the usage of the first SR policy is the second SR policy. In this case, the control entity may determine, based on the first indication information, that the usage of the first SR policy is the SR policy for protection and an SR policy protected by the first SR policy is the second SR policy.

For another example, the first indication information indicates the usage of the first SR policy, second indication information indicates the second indication is related to the first indication information, and the second indication information indicates the second SR policy. In this case, the control entity may determine, based on the first indication information, that the usage of the first SR policy is the SR policy for protection, and may determine, based on the second indication information, that an SR policy protected by the first SR policy is the second SR policy.

The first indication information may belong to a part of the first SR policy. For example, the first indication information may be carried in an extended policy type or policy role in an encapsulation structure of the first SR policy. Alternatively, the first indication information may not belong to the first SR policy, but may be associated with the first SR policy in another manner, so that the first network device receiving the first message can sense that the first indication information indicates the usage of the first SR policy.

In some implementations, the first message may be a BGP SR policy packet, and the BGP SR policy packet carries the first SR policy and the first indication information. In an example, the first indication information may be carried in an extended sub-type length value (Sub-TLV) of the BGP SR policy packet. For example, a policy role sub-TLV (which may also be referred to as a policy type sub-TLV) field is defined in draft-ietf-idr-segment-routing-te-policy. As shown in FIG. 4, the policy role sub-TLV field may include a type field, a length field, a role field, and a reserved (Reserved) field. A value of the type field indicates that a type of the sub-TLV is a policy role sub-TLV, a value of the length field indicates a length of the sub-TLV, and a value of the role field indicates the usage of the first SR policy. For example, if the value of the role field is equal to 1, it may indicate that the usage of the first SR policy is the SR policy used for being associated. If the value of the role field is equal to 0, it may indicate that the usage of the first SR policy is the end-to-end SR policy.

In some other implementations, the first message may be a path computation element protocol (Path Calculation Element Protocol, PCEP) packet, and the PCEP packet carries the first SR policy and the first indication information. In an example, the first indication information may be carried in an extended TLV of SR policy association information (association information) of the PCEP packet. For a format of the SR policy association information and a definition of each part, refer to draft-ietf-pce-segment-routing-policy. As shown in FIG. 5, an extended TLV field used to carry the first indication information may include a type field, a length field, a role field, and a reserved (Must Be Zero, MBZ) field. A value of the type field indicates that a type of the TLV is a policy role TLV (which may also be referred to as a policy type TLV), a value of the length field indicates a length of the TLV, and a value of the role field indicates the usage of the first SR policy. For example, if the value of the role field is equal to 10, it may indicate that the usage of the first SR policy is the SR policy used for being associated. If the value of the role field is equal to 01, it may indicate that the usage of the first SR policy is the SR policy for protection. If the value of the role field is equal to 00, it may indicate that the usage of the first SR policy is the end-to-end SR policy.

S104: The first network device processes the first SR policy based on the first indication information.

S105: The first network device sends state information to the control entity, where the state information indicates a state of the first SR policy.

It should be noted that, currently, when the control entity delivers the SR policy 2 without specifying a usage of the SR policy 2, after receiving the SR policy 2, a headend 1 of the SR policy 2 reports a state of the SR policy 2 to the control entity after installing the SR policy 2. If the SR policy 2 is a related SR policy of another SR policy 1, the control entity needs to obtain other information from the reported state of the SR policy 2 (for example, obtain a BSID for identifying the associated SR policy 2 from the reported state of the associated SR policy 2), to determine whether the another SR policy 1 can be delivered to the network device to guide forwarding. However, an example in which the other information is the BSID for identifying the associated SR policy 2 is used. In a case, after receiving the state of the SR policy 2 reported by the headend 1, because the control entity does not obtain the required other information (for example, a BSID 1), the control entity immediately determines that a headend 2 cannot apply for the BSID for identifying the SR policy 2, and thus considers that path computation for the another SR policy 1 fails, and continues to perform another path computation procedure. Alternatively, after the controller entity does not obtain the BSID for identifying the SR policy 2 from a plurality of reported states of the SR policy 2 that are received within preset duration (for example, 10 seconds), the control entity determines that a headend 2 cannot apply for the BSID for identifying SR policy 2, and thus determines that path computation for the another SR policy 1 fails. However, the control entity does not obtain the BSID for identifying the SR policy 2. A possible cause is that the headend 1 needs specific time to apply for the BSID for the associated SR policy 2, and the time exceeds waiting time of the control entity. Alternatively, the headend 1 does not perform an operation of applying for the BSID corresponding to the SR policy 2 because the headend 1 does not learn of a usage of the SR policy 2. In either case, the failure of path computation for the SR policy 1 is ultimately caused by inability of the headend 1 and the control entity to sense the usage of the SR policy 2. It can be learned that, currently, because a usage of an SR policy is not specified when the SR policy is delivered, network resources such as bandwidth and computing resources are wasted.

In some implementations of this embodiment of this application, the control entity and the network device may agree on processing manners of SR policies having different usages. For example, for the associated SR policy, after the control entity delivers the associated SR policy to the headend, the headend starts to report a state only after successfully applying for a BSID for the associated SR policy, to save the bandwidth resources. Alternatively, for another example, for the associated SR policy, after the control entity delivers the associated SR policy to the headend, although the headend starts to report a state immediately after installing the associated SR policy, the control entity continuously waits for a BSID of the associated SR policy that is reported by the headend or a notification reported by the headend that the BSID of the associated SR policy cannot be successfully applied for, and then determines a path computation result of the end-to-end SR policy associated with the associated SR policy. This saves the computing resources in the network while ensuring normal running of a service.

An example in which the first SR policy is associated with the second SR policy is used. For example, S104 and S105 may include: The first network device sends the state information to the control entity based on the first indication information after a BSID of the first SR policy is successfully applied for, where the BSID identifies the first SR policy, and the state information indicates the state of the first SR policy.

In an example, for example, that the first network device sends the state information to the control entity may include: The first network device sends a BGP LS packet to the control entity, where the BGP LS packet includes the state information, and the state information may indicate, for example, that the state of the first SR policy is normal (Up) or abnormal (Down). In addition, the BGP LS packet may further include the BSID for identifying the first SR policy. In addition, the BGP LS packet may further include third indication information, the third indication information is associated with the first indication information, and the third indication information indicates that the usage of the first SR policy is the SR policy used for being associated. In an example, the third indication information may be carried in an extended TLV in SR policy state (State) TLVs in the BGP LS packet. For a format of an SR policy state and a definition of each part, refer to draft-ietf-idr-te-lsp-distribution. As shown in FIG. 6, an extended TLV field used to carry the third indication information may include a type field, a length field, a role field, and a reserved field. A value of the type field indicates that a type of the TLV is a policy role TLV (which may also be referred to as a policy type TLV), a value of the length field indicates a length of the TLV, and a value of the role field indicates the usage of the first SR policy. Similarly, the BSID for identifying the first SR policy and the state information of the first SR policy may also be carried in the extended TLV field in the SR policy state TLVs in the BGP LS packet.

In some implementations, the first indication information indicates that the usage of the first SR policy is the SR policy used for being associated, and the first SR policy is associated with the second SR policy. In this case, after S105, the method 100 may further include: The control entity receives a BSID sent by the first network device, where the BSID identifies the first SR policy; and the control entity updates the second SR policy based on the BSID, where an updated second SR policy includes the BSID, and sends the updated second SR policy to a second network device, where the second network device is a headend of the second SR policy. In this way, the second network device is prepared to subsequently install the second SR policy and effectively forward a service packet.

In an example, for a service packet that matches the second SR policy, the second network device obtains a first service packet after performing encapsulation based on the second SR policy, and sends the first service packet to the first network device, where the first service packet includes a second segment list in the second SR policy, and the second segment list includes the BSID. In this case, after receiving the first service packet sent by the second network device, the first network device may encapsulate, based on the BSID, a first segment list included in the first SR policy in the first service packet, to obtain a second service packet. Then, the first network device forwards the second service packet based on the first segment list. The first network device corresponds to the network device 24 in FIG. 2, the first SR policy corresponds to the SR policy 2, the BSID corresponds to the BSID 1, and the second SR policy corresponds to the SR policy 1. In this case, the first service packet corresponds to the service packet 2, and the second service packet corresponds to the service packet 3. For a process of processing the first service packet by the first network device, refer to S33 and S34 in the embodiment corresponding to FIG. 2.

In some other implementations, the first indication information indicates that the usage of the first SR policy is the SR policy for protection, and the first SR policy protects the second SR policy. In this implementation, when a fault occurs in a part that is in the second SR policy and that is protected by the first SR policy, the first SR policy may be switched to an active path, to forward a service packet in place of the part that is in the second SR policy and that is protected by the first SR policy, to ensure that a service is not affected by the fault and can run normally. In this case, after S105, optionally, the method 100 may further include: The control entity receives a BSID sent by the first network device, where the BSID identifies the first SR policy; and when a fault occurs in the part that is in the second SR policy and that is protected by the first SR policy, the control entity or the second network device updates the second SR policy based on the BSID, where an updated second SR policy includes the BSID, and the second network device obtains the updated second SR policy. In this way, it is possible to effectively forward the service packet when the second SR policy is faulty.

In this embodiment of this application, the usage of the first SR policy is notified to the first network device. In this way, the first network device is enabled to perform targeted processing on the first SR policy having different usages, so that the first SR policy can be effective corresponding to the usage of the first SR policy. In addition, the first network device may adaptively report a change of the first SR policy based on the first SR policy having different usages. For example, the first indication information indicates that the usage of the first SR policy is the SR policy used for being associated, and the first SR policy is associated with the second SR policy. In this case, when the second forwarding path indicated by the second SR policy is faulty, the control entity performs path computation again. A new path computation result may pass through the first network device, or may not pass through the first network device. Regardless of whether the new path computation result passes through the first network device, provided that the new path computation result does not use the first SR policy, the control entity may indicate the first network device to delete the first SR policy. Currently, any state change of the SR policy needs to be reported to the control entity. However, in this embodiment of this application, if the first network device determines, based on the first indication information, that the usage of the first SR policy is the SR policy used for being associated, the first network device skips an operation of reporting an alarm related to the first SR policy, for example, skips an operation of sending, to the control entity, an alarm indicating that the first SR policy is deleted and the state is switched to Down. It can be learned that, in this embodiment of this application, unnecessary alarms can be adaptively reduced based on the indication information indicating the usage of the SR policy. This not only saves the network resources, but also improves alarm processing efficiency in a context of a large quantity of alarms being difficult to be analyzed and processed, thereby contributing to network security.

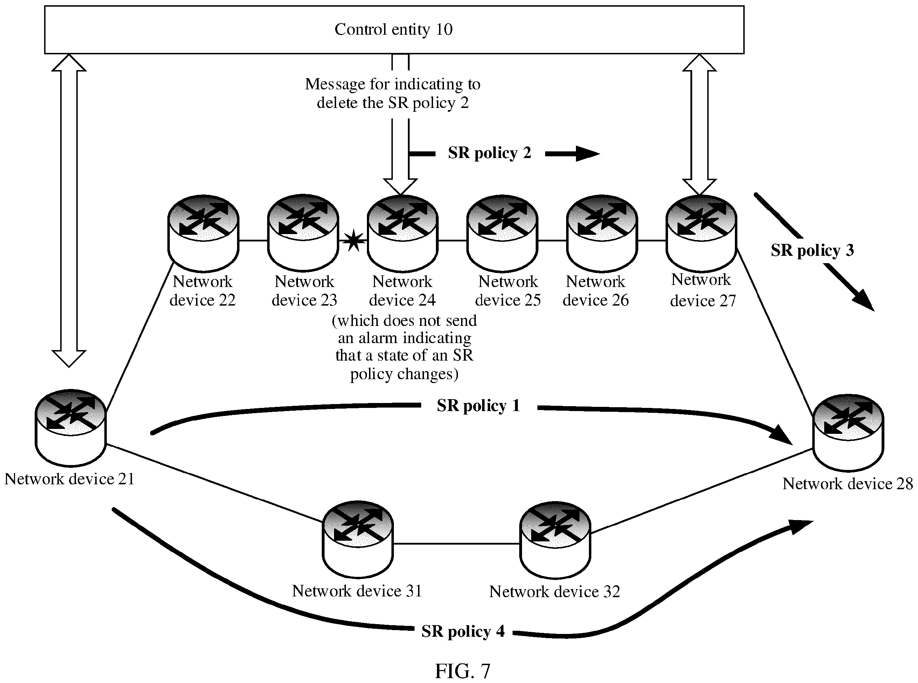

The scenario shown in FIG. 2 is used as an example. As shown in FIG. 7, it is assumed that a link between a network device 23 and a network device is faulty, the control entity 10 performs path computation again, and an obtained path computation result is an end-to-end SR policy 4 that is from a network device 21 to a network device 28 and sequentially passes through a network device 31 and a network device 32. In this case, the control entity 10 determines that the SR policy 4 meets the MSD of each network device, and may directly send the SR policy 4 to the network device 21. Then, because the SR policy 4 does not pass through a network device 24, the control entity 10 sends a message to the network device 24, where the message is used to indicate the network device 24 to delete the SR policy 2. After receiving the message, the network device 24 deletes the SR policy 2 or sets the state of the SR policy 2 to an unavailable state (which may also be denoted as Down). The network device 24 determines, based on indication information 2, that the usage of the SR policy 2 is the SR policy used for being associated, and thus does not send, to the control entity 10, an alarm indicating that the state of the SR policy 2 is switched to the unavailable state.

It can be learned that according to the method 100, when sending an SR policy to a headend of the SR policy, a control entity notifies the headend of a usage of the SR policy based on indication information of the SR policy. After sensing the usage of the SR policy based on the received indication information, the headend may perform corresponding operations based on different usages, to ensure that the SR policy takes effect. For example, when it is ensured that a quantity of SIDs included in a segment list in an end-to-end SR policy exceeds an MSD of a network device, an associated SR policy corresponding to the end-to-end SR policy can be effectively deployed, and a service packet can be effectively forwarded based on the end-to-end SR policy and the associated SR policy, so that bandwidth resource utilization is improved. In addition, in this embodiment of this application, when an alarm is reported for a state change of an SR policy, targeted processing may be performed based on sensed different usages of the SR policy, to reduce unnecessary alarms and reduce costs of security maintenance operations such as alarm analysis.

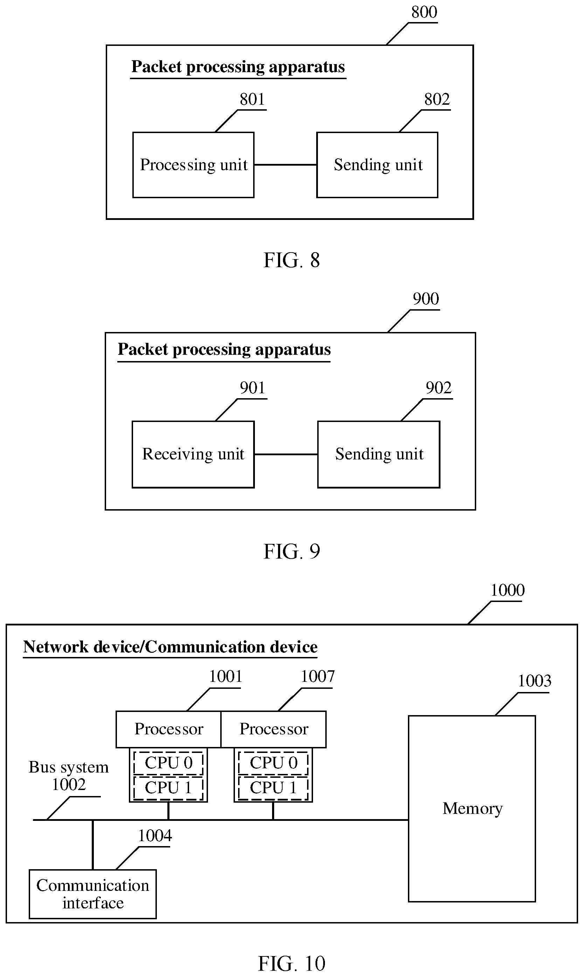

Correspondingly, an embodiment of this application further provides a packet processing apparatus 800. The apparatus 800 is used in a control entity, as shown in FIG. 8. The apparatus 800 may include a processing unit 801 and a sending unit 802.

The processing unit 801 is configured to generate a first message, where the first message includes a first segment routing policy SR policy and indication information, and the indication information indicates a usage of the first SR policy. The processing unit 801 may perform S101 shown in FIG. 3.

The sending unit 802 is configured to send the first message to a first network device. The sending unit 802 may perform S102 shown in FIG. 3.

In some implementations, the indication information indicates that the usage of the first SR policy is an SR policy used for being associated. The first SR policy is associated with a second SR policy, a first forwarding path indicated by the first SR policy is associated with a second forwarding path indicated by the second SR policy, and the second forwarding path includes the first forwarding path.

In some other implementations, the indication information indicates that the usage of the first SR policy is an SR policy for protection. The first SR policy protects a second SR policy, and a first forwarding path indicated by the first SR policy is a protection path of a second forwarding path indicated by the second SR policy.

In some implementations, the apparatus 800 may further include a receiving unit. The receiving unit is configured to receive a binding segment identifier BSID sent by the first network device, where the BSID identifies the first SR policy. The sending unit 802 is further configured to send the second SR policy to a second network device, where the second SR policy includes the BSID.

In some implementations, the processing unit 801 is further configured to: obtain network information before generating the first message, where the network information includes topology information of a network, a max stack depth of each network device in the network, and a segment identifier SID of each network device in the network; and determine the first SR policy based on the network information.

In some implementations, the first message is a BGP SR policy packet. In this case, the indication information is carried in a sub-type length value Sub-TLV of the BGP SR policy packet.

In some other implementations, the first message is a PCEP packet. In this case, the indication information is carried in a TLV of SR policy association information in the PCEP packet.

It should be noted that, for a specific implementation and achieved technical effect of the apparatus 800 provided in this embodiment of this application, refer to the descriptions of related operations of the control entity in the method 100.

Correspondingly, an embodiment of this application further provides a packet processing apparatus 900. The apparatus 900 is used in a first network device, as shown in FIG. 9. The apparatus 900 may include a receiving unit 901 and a sending unit 902.

The receiving unit 901 is configured to receive a first message sent by a control entity, where the first message includes a first segment routing policy SR policy and first indication information, the first indication information indicates that a usage of the first SR policy is an SR policy used for being associated, a first forwarding path indicated by the first SR policy is associated with a second forwarding path indicated by a second SR policy, and the second forwarding path includes the first forwarding path. The receiving unit 901 may perform S103 shown in FIG. 3.

The sending unit 902 is configured to send state information to the control entity based on the first indication information after a binding segment identifier BSID of the first SR policy is successfully applied for, where the BSID identifies the first SR policy, and the state information indicates a state of the first SR policy. The sending unit 902 may perform S104 and S105 shown in FIG. 3.

In some implementations, the apparatus 900 further includes a processing unit. The receiving unit 901 is further configured to receive a first service packet sent by a second network device, where the first service packet includes a second segment list in the second SR policy, the second segment list includes the BSID, and the second network device is a headend of the second SR policy. The processing unit is configured to encapsulate, based on the BSID, a first segment list included in the first SR policy into the first service packet, to obtain a second service packet. The sending unit 902 is further configured to forward the second service packet based on the first segment list.

In some implementations, the apparatus 900 further includes a processing unit. The processing unit is configured to skip, based on the first indication information, an operation of reporting an alarm related to the first SR policy.

In some implementations, the receiving unit 901 is specifically configured to receive a BGP SR policy packet sent by the control entity.

In some other implementations, the receiving unit 901 is specifically configured to receive a PCEP packet sent by the control entity.

In some implementations, the sending unit 902 is specifically configured to send a BGP LS packet to the control entity, where the BGP LS packet includes the state information.

In some implementations, the BGP LS packet further includes second indication information, the second indication information is associated with the first indication information, and the second indication information indicates that the usage of the first SR policy is the SR policy used for being associated. The second indication information is carried in a TLV in SR policy state TLVs in the BGP LS packet.

It should be noted that, for a specific implementation and achieved technical effect of the apparatus 900 provided in this embodiment of this application, refer to the descriptions of related operations of the first network device in the method 100.

Refer to FIG. 10. An embodiment of this application provides a network device 1000 (which may also be referred to as a communication device 1000). The network device 1000 may be the network device in any one of the foregoing embodiments, for example, may be the network device 21, the network device 24, or the network device 27 in FIG. 1, or may be the first network device in the method 100. The network device 1000 may implement functions of various network devices in the foregoing embodiments. Alternatively, the network device 1000 may be the control entity in any one of the foregoing embodiments, for example, may be the control entity 10 in FIG. 1, or may be the control entity in the method 100. The network device 1000 may implement functions of control entities in the foregoing embodiments. The network device 1000 includes at least one processor 1001, a bus system 1002, a memory 1003, and at least one communication interface 1004.

The network device 1000 is an apparatus of a hardware structure, and may be configured to implement functional modules in the packet processing apparatus 800 shown in FIG. 8. For example, a person skilled in the art may figure out that the processing unit 801 in the packet processing apparatus 800 shown in FIG. 8 may be implemented by using the at least one processor 1001 by invoking code in the memory 1003. Alternatively, the network device 1000 is an apparatus of a hardware structure, and may be configured to implement functional modules in the packet processing apparatus 900 shown in FIG. 9. For example, a person skilled in the art may figure out that the processing unit in the packet processing apparatus 900 shown in FIG. 9 may be implemented by using the at least one processor 1001 by invoking code in the memory 1003.

Optionally, the network device 1000 may further be configured to implement a function of the network device in any one of the foregoing embodiments.

Optionally, the processor 1001 may be a general-usage central processing unit (central processing unit, CPU), a network processor (network processor, NP), a microprocessor, an application-specific integrated circuit (application-specific integrated circuit, ASIC), or one or more integrated circuits configured to control program execution of the solutions in this application.

The bus system 1002 may include a path for transmitting information between the foregoing components.

The communication interface 1004 is configured to communicate with another device or a communication network.

The memory 1003 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Bluray disc, or the like), a magnetic disk storage medium or another magnetic storage device, or any other medium that can be used to carry or store expected program code in a form of instruction or data structure and that can be accessed by a computer. However, the memory 1003 is not limited thereto. The memory may exist independently, and is connected to the processor through the bus. The memory may alternatively be integrated with the processor.

The memory 1003 is configured to store application code for performing the solutions in this application, and the application code is executed under control of the processor 1001. The processor 1001 is configured to execute the application program code stored in the memory 1003, to implement functions in the method in this application.

During specific implementation, in an embodiment, the processor 1001 may include one or more CPUs, for example, a CPU 0 and a CPU 1 in FIG. 10.

During specific implementation, in an embodiment, the network device 1000 may include a plurality of processors, for example, the processor 1001 and a processor 1007 shown in FIG. 10. Each of the processors may be a single-core (single-CPU) processor, or may be a multicore (multi-CPU) processor. The processor herein may be one or more devices, circuits, and/or processing cores used to process data (for example, computer program instructions).

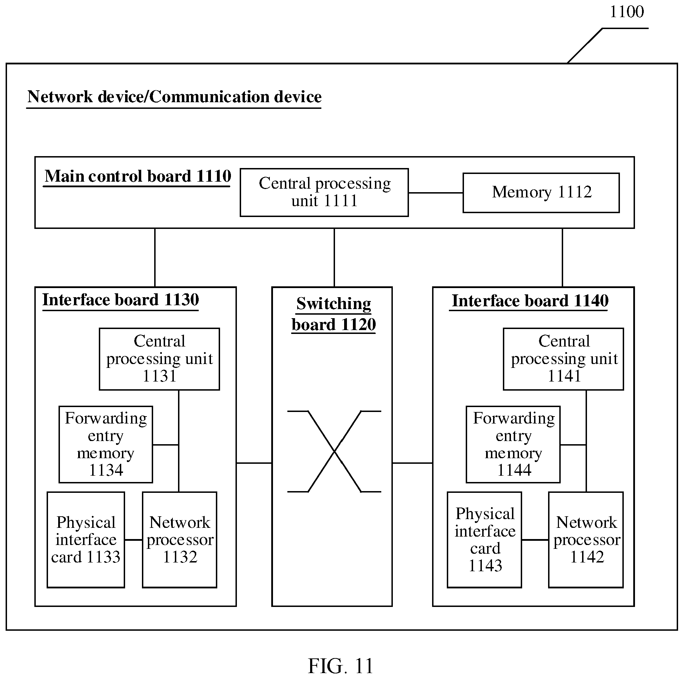

FIG. 11 is a diagram of a structure of another network device 1100 (which may also be referred to as a communication device 1100) according to an embodiment of this application. The network device 1100 may be the first network device or the control entity in any one of the foregoing embodiments, and may be the network device 21, the network device 24, the network device 27, or the control entity 10 in FIG. 1. For another example, the network device 1100 may be the first network device or the control entity in the method 100. The network device 1100 may implement functions of various network devices or control entities in the foregoing embodiments.

The network device 1100 includes a main control board 1110 and an interface board 1130.

The main control board 1110 is also referred to as a main processing unit (main processing unit, MPU) or a route processing card (route processor card). The main control board 1110 controls and manages components in the network device 1100, including functions of route computation, device management, device maintenance, and protocol processing. The main control board 1110 includes a central processing unit 1111 and a memory 1112.

The interface board 1130 is also referred to as a line processing unit (line processing unit, LPU), a line card (line card), or a service board. The interface board 1130 is configured to provide various service interfaces, and forward a data packet. The service interface includes but is not limited to an Ethernet interface and a POS (Packet over SONET/SDH) interface. The Ethernet interface is, for example, a flexible Ethernet service interface (Flexible Ethernet Clients, FlexE Clients). The interface board 1130 includes a central processing unit 1131, a network processor 1132, a forwarding entry memory 1134, and a physical interface card (physical interface card, PIC) 1133.

The central processing unit 1131 on the interface board 1130 is configured to: control and manage the interface board 1130, and communicate with the central processing unit 1111 on the main control board 1110.

The network processor 1132 is configured to implement packet forwarding processing. A form of the network processor 1132 may be a forwarding chip. Specifically, processing on an uplink packet includes processing at a packet ingress interface, and forwarding table lookup, and processing on a downlink packet includes forwarding table lookup, and the like.

The physical interface card 1133 is configured to implement a physical layer interconnection function. Original traffic enters the interface board 1130 from the physical interface card, and a processed packet is sent from the physical interface card 1133. The physical interface card 1133 includes at least one physical interface, and the physical interface is also referred to as a physical port. The physical interface card 1133 corresponds to a FlexE physical interface in a system architecture. The physical interface card 1133 is also referred to as a subcard, may be installed on the interface board 1130, and is responsible for converting an optical/electrical signal into a packet, performing validity check on the packet, and forwarding the packet to the network processor 1132 for processing. In some embodiments, the central processing unit 1131 of the interface board 1130 may alternatively perform a function of the network processor 1132, for example, implement software forwarding based on a general-usage CPU. Therefore, the network processor 1132 is not necessary in the physical interface card 1133.

Optionally, the network device 1100 includes a plurality of interface boards. For example, the network device 1100 further includes an interface board 1140. The interface board 1140 includes a central processing unit 1141, a network processor 1142, a forwarding entry memory 1144, and a physical interface card 1143.

Optionally, the network device 1100 further includes a switching board 1120. The switching board 1120 may also be referred to as a switch fabric unit (switch fabric unit, SFU). When the network device has a plurality of interface boards 1130, the switching board 1120 is configured to complete data exchange between the interface boards. For example, the interface board 1130 and the interface board 1140 may communicate with each other through the switching board 1120.

The main control board 1110 is coupled to the interface board 1130. For example, the main control board 1110, the interface board 1130 and the interface board 1140, and the switching board 1120 are connected to a system backboard by using a system bus for interworking. In a possible implementation, an inter-process communication (inter-process communication, IPC) channel is established between the main control board 1110 and the interface board 1130, and the main control board 1110 and the interface board 1130 communicate with each other through the IPC channel.

Logically, the network device 1100 includes a control plane and a forwarding plane. The control plane includes the main control board 1110 and the central processing unit 1131. The forwarding plane includes various components configured for forwarding, for example, the forwarding entry memory 1134, the physical interface card 1133, and the network processor 1132. The control plane performs functions such as routing, generating a forwarding table, processing signaling and a protocol packet, and configuring and maintaining a device state. The control plane delivers the generated forwarding table to the forwarding plane. On the forwarding plane, the network processor 1132 searches the forwarding table delivered by the control plane to forward a packet received by the physical interface card 1133. The forwarding table delivered by the control plane may be stored in the forwarding entry memory 1134. In some embodiments, the control plane and the forwarding plane may be completely separated, and are not on a same device.

If the network device 1100 is configured as the control entity, the central processing unit 1111 may generate a first message, where the first message includes a first segment routing policy SR policy and indication information, and the indication information indicates a usage of the first SR policy. The network processor 1132 may further trigger the physical interface card 1133 to send the first message to the first network device.

It should be understood that the sending unit 802 in the packet processing apparatus 800 may be equivalent to the physical interface card 1133 or the physical interface card 1143 in the network device 1100, and the processing unit 801 in the packet processing apparatus 800 may be equivalent to the central processing unit 1111 or the central processing unit 1131 in the network device 1100.

It should be understood that operations performed on the interface board 1140 are consistent with operations performed on the interface board 1130 in this embodiment of this application. For brevity, details are not described again. It should be understood that the network device 1100 in this embodiment may correspond to the packet processing apparatus 800 in the foregoing embodiments. The main control board 1110, the interface board 1130, and/or the interface board 1140 in the network device 1100 may implement functions and/or various steps implemented in the packet processing apparatus 800 in the foregoing embodiments. For brevity, details are not described herein again.

If the network device 1100 is configured as the first network device, the network processor 1132 may trigger the physical interface card 1133 to receive a first message sent by the control entity, where the first message includes a first segment routing policy SR policy and first indication information, the first indication information indicates that a usage of the first SR policy is an SR policy used for being associated, a first forwarding path indicated by the first SR policy is associated with a second forwarding path indicated by a second SR policy, and the second forwarding path includes the first forwarding path. The network processor 1132 may further trigger the physical interface card 1133 to send state information to the control entity based on the first indication information after a binding segment identifier BSID of the first SR policy is successfully applied for, where the BSID identifies the first SR policy, and the state information indicates a state of the first SR policy.

It should be understood that the receiving unit 901 and the sending unit 902 in the packet processing apparatus 900, and the communication interface 1004 in the network device 1000 may be equivalent to the physical interface card 1133 or the physical interface card 1143 in the network device 1100; and the processing unit in the packet processing apparatus 900 and the processor 1001 in the network device 1000 may be equivalent to the central processing unit 1111 or the central processing unit 1131 in the network device 1100.

It should be understood that the operations performed on the interface board 1140 are consistent with the operations performed on the interface board 1130 in this embodiment of this application. For brevity, details are not described again. It should be understood that the network device 1100 in this embodiment may correspond to the packet processing apparatus 900 or the network device 1000 in the foregoing embodiments. The main control board 1110, the interface board 1130, and/or the interface board 1140 in the network device 1100 may implement functions and/or various steps implemented in the packet processing apparatus 900 or the network device 1000 in the foregoing embodiments. For brevity, details are not described herein again.

It should be understood that, there may be one or more main control boards. When there are a plurality of main control boards, the main control boards may include an active main control board and a standby main control board. There may be one or more interface boards. A stronger data processing capability of the network device indicates a larger quantity of provided interface boards. There may also be one or more physical interface cards on the interface board. There may be no switching board or one or more switching boards. When there are a plurality of switching boards, load balancing and redundancy backup may be implemented together. In a centralized forwarding architecture, the network device may not need a switching board, and the interface board provides a function of processing service data of an entire system. In a distributed forwarding architecture, the network device may have at least one switching board, and data exchange between a plurality of interface boards is implemented by using the switching board, to provide a large-capacity data exchange and processing capability. Therefore, a data access and processing capability of the network device in the distributed architecture is greater than that of the device in the centralized architecture. Optionally, the network device may alternatively be in a form in which there is only one card. To be specific, there is no switching board, and functions of the interface board and the main control board are integrated on the card. In this case, a central processing unit on the interface board and a central processing unit on the main control board may be combined to form one central processing unit on the card, to perform functions obtained after the two central processing units are combined. This form of device (for example, a network device like a low-end switch or a router) has a weak data exchange and processing capability. A specific architecture that is to be used depends on a specific networking deployment scenario.

In some possible embodiments, each of the foregoing network devices may be implemented as a virtualized device. For example, the virtualized device may be a virtual machine (English: Virtual Machine, VM) on which a program having a packet sending function is run, and the virtual machine is deployed on a hardware device (for example, a physical server). The virtual machine is a complete software-simulated computer system that has complete hardware system functions and that runs in an entirely isolated environment. The virtual machine may be configured as each network device or control entity in embodiments of this application. For example, each network device may be implemented based on a general-usage physical server with reference to a network functions virtualization (Network Functions Virtualization, NFV) technology. Each network device is a virtual host, a virtual router, or a virtual switch. After reading this application, with reference to the NFV technology, a person skilled in the art may virtualize, on the general-usage physical server, the network devices having the foregoing functions. Details are not described herein again.

It should be understood that the network devices in the foregoing product forms respectively have any functions of the network devices or communication devices in the foregoing method embodiments, and details are not described herein again.

An embodiment of this application further provides a chip, including a processor and an interface circuit. The interface circuit is configured to receive instructions and transmit the instructions to the processor. The processor may be, for example, a specific implementation form of the packet processing apparatus in embodiments of this application, and may be configured to perform the foregoing route selection method. The processor is coupled to a memory. The memory is configured to store a program or instructions. When the program or the instructions are executed by the processor, a chip system is enabled to implement the method in any one of the foregoing method embodiments.

Optionally, there may be one or more processors in the chip system. The processor may be implemented by using hardware, or may be implemented by using software. When the processor is implemented by using the hardware, the processor may be a logic circuit, an integrated circuit, or the like. When the processor is implemented by using the software, the processor may be a general-usage processor, and is implemented by reading software code stored in the memory.

Optionally, there may also be one or more memories in the chip system. The memory may be integrated with the processor, or may be disposed separately from the processor. This is not limited in this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in this application.

For example, the chip system may be a field programmable gate array (field programmable gate array, FPGA), an application specific integrated circuit (application specific integrated circuit, ASIC), a system on a chip (system on a chip, SoC), a central processing unit (central processing unit, CPU), a network processor (network processor, NP), a digital signal processor (digital signal processor, DSP), a micro controller unit (micro controller unit, MCU), a programmable logic device (programmable logic device, PLD), or another integrated chip.

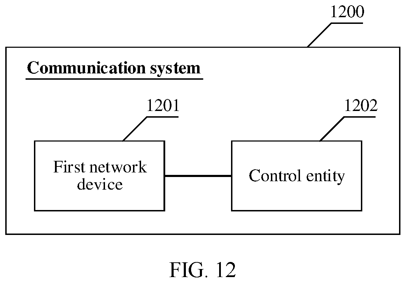

In addition, an embodiment of this application further provides a communication system 1200. Refer to FIG. 12. The communication system 1200 may include a first network device 1201 and a control entity 1202. The first network device 1201 is configured to perform steps corresponding to the first network device in any possible implementation of the foregoing method 100. The control entity 1202 is configured to perform steps corresponding to the control entity in any possible implementation of the foregoing method 100.

In addition, an embodiment of this application further provides a computer-readable storage medium. The computer-readable storage medium stores program code or instructions. When the program code or the instructions are run on a computer, the computer is enabled to perform the method in any implementation of the embodiment shown in FIG. 3.

In addition, an embodiment of this application further provides a computer program product. When the computer program product runs on a computer, the computer is enabled to perform the method in any implementation of the method 100.

It should be understood that "determining B based on A" mentioned in embodiments of this application does not mean that B is determined based only on A, and B may be determined based on A and/or other information.

"First" in names such as "first SR policy" and "first indication information" mentioned in this application is merely used as a name identifier, and does not represent "first" in a sequence. Such a rule is also applicable to "second" and the like.

From the foregoing descriptions of the implementations, a person skilled in the art may clearly understand that some or all steps of the methods in embodiments may be implemented by software in addition to a universal hardware platform. Based on such an understanding, the technical solutions of this application may be implemented in a form of a software product. The computer software product may be stored in a storage medium, for example, a read-only memory (English: read-only memory, ROM)/RAM, a magnetic disk, or a compact disc, and includes several instructions for instructing a computer device (which may be a personal computer, a server, or a network communication device like a router) to perform the methods described in embodiments or some parts of embodiments of this application.

Embodiments in this specification are all described in a progressive manner, for same or similar parts in embodiments, reference may be made to these embodiments, and each embodiment focuses on a difference from other embodiments. Especially, system embodiments and device embodiments are basically similar to method embodiments, and therefore are described briefly. For related parts, refer to partial descriptions in the method embodiments. The described device and system embodiments are merely examples. The modules described as separate parts may or may not be physically separate, and parts displayed as modules may or may not be physical modules, may be located in one position, or may be distributed on a plurality of network units. Some or all the modules may be selected according to actual needs to achieve the objectives of the solutions of embodiments. A person of ordinary skill in the art may understand and implement embodiments of the present invention without creative efforts.

The foregoing merely describes example implementations of this application, and is not intended to limit the protection scope of this application. It should be noted that a person of ordinary skill in the art may make improvements and polishing without departing from this application and such improvements and polishing shall fall within the protection scope of this application.

## Claims

1. A packet processing method, wherein the method is applied to a control entity and comprises:
generating a first message, wherein the first message comprises a first segment routing policy SR policy and indication information, and the indication information indicates a usage of the first SR policy; and
sending the first message to a first network device.

2. The method according to claim 1, wherein the indication information indicates that the usage of the first SR policy is an SR policy used for being associated, wherein the first SR policy is associated with a second SR policy, a first forwarding path indicated by the first SR policy is associated with a second forwarding path indicated by the second SR policy, and the second forwarding path comprises the first forwarding path.

3. The method according to claim 1, wherein the indication information indicates that the usage of the first SR policy is an SR policy for protection, wherein the first SR policy protects a second SR policy, and a first forwarding path indicated by the first SR policy is a protection path of a second forwarding path indicated by the second SR policy.

4. The method according to claim 2 or 3, wherein the method further comprises:
receiving a binding segment identifier BSID sent by the first network device, wherein the BSID identifies the first SR policy; and
sending the second SR policy to a second network device, wherein the second SR policy comprises the BSID.

5. The method according to any one of claims 1 to 4, wherein before the generating a first message, the method further comprises:
obtaining network information, wherein the network information comprises topology information of a network, a max stack depth of each network device in the network, and a segment identifier SID of each network device in the network; and
determining the first SR policy based on the network information.

6. The method according to any one of claims 1 to 5, wherein the first message is a border gateway protocol BGP SR policy packet.

7. The method according to claim 6, wherein the indication information is carried in a sub-type length value Sub-TLV of the BGP SR policy packet.

8. The method according to any one of claims 1 to 5, wherein the first message is a path computation element protocol PCEP packet.

9. The method according to claim 8, wherein the indication information is carried in a TLV of SR policy association information in the PCEP packet.

10. A packet processing method, wherein the method is applied to a first network device and comprises:
receiving a first message sent by a control entity, wherein the first message comprises a first segment routing policy SR policy and first indication information, the first indication information indicates that a usage of the first SR policy is an SR policy used for being associated, a first forwarding path indicated by the first SR policy is associated with a second forwarding path indicated by a second SR policy, and the second forwarding path comprises the first forwarding path; and
sending state information to the control entity based on the first indication information after a binding segment identifier BSID of the first SR policy is successfully applied for, wherein the BSID identifies the first SR policy, and the state information indicates a state of the first SR policy.

11. The method according to claim 10, wherein the method further comprises:
receiving a first service packet sent by a second network device, wherein the first service packet comprises a second segment list in the second SR policy, the second segment list comprises the BSID, and the second network device is a headend of the second SR policy;
encapsulating, based on the BSID, a first segment list comprised in the first SR policy into the first service packet, to obtain a second service packet; and
forwarding the second service packet based on the first segment list.

12. The method according to claim 10 or 11, wherein the method further comprises:
skipping, based on the first indication information, an operation of reporting an alarm related to the first SR policy.

13. The method according to any one of claims 10 to 12, wherein the receiving a first message sent by a control entity comprises:
receiving a border gateway protocol BGP SR policy packet sent by the control entity.

14. The method according to any one of claims 10 to 12, wherein the receiving a first message sent by a control entity comprises:
receiving a path computation element protocol PCEP packet sent by the control entity.

15. The method according to any one of claims 10 to 14, wherein the sending state information to the control entity comprises:
sending a BGP link state LS packet to the control entity, wherein the BGP LS packet comprises the state information.

16. The method according to claim 15, wherein the BGP LS packet further comprises the second indication information, the second indication information is associated with the first indication information, and the second indication information indicates that the usage of the first SR policy is an SR policy used for being associated.

17. The method according to claim 16, wherein the second indication information is carried in a TLV in SR policy state TLVs in the BGP LS packet.

18. The method according to any one of claims 1 to 17, wherein
the first SR policy is a segment routing on IPv6 policy SRv6 policy; or
the first SR policy is a segment routing on multi-protocol label switching policy SR MPLS policy.

19. A packet processing apparatus, wherein the apparatus is used in a control entity and comprises:
a processing unit, configured to generate a first message, wherein the first message comprises a first segment routing policy SR policy and indication information, and the indication information indicates a usage of the first SR policy; and
a sending unit, configured to send the first message to a first network device.

20. The apparatus according to claim 19, wherein the indication information indicates that the usage of the first SR policy is an SR policy used for being associated, wherein the first SR policy is associated with a second SR policy, a first forwarding path indicated by the first SR policy is associated with a second forwarding path indicated by the second SR policy, and the second forwarding path comprises the first forwarding path.

21. The apparatus according to claim 19, wherein the indication information indicates that the usage of the first SR policy is an SR policy for protection, wherein the first SR policy protects a second SR policy, and a first forwarding path indicated by the first SR policy is a protection path of a second forwarding path indicated by the second SR policy.

22. The apparatus according to claim 20 or 21, wherein the apparatus further comprises:
a receiving unit, configured to receive a binding segment identifier BSID sent by the first network device, wherein the BSID identifies the first SR policy; and
the sending unit is further configured to send the second SR policy to a second network device, wherein the second SR policy comprises the BSID.

23. The apparatus according to any one of claims 19 to 22, wherein the processing unit is further configured to:
obtain network information before the generating a first message, wherein the network information comprises topology information of a network, a max stack depth of each network device in the network, and a segment identifier SID of each network device in the network; and
determine the first SR policy based on the network information.

24. The apparatus according to any one of claims 19 to 23, wherein the first message is a border gateway protocol BGP SR policy packet.

25. The apparatus according to claim 24, wherein the indication information is carried in a sub-type length value Sub-TLV of the BGP SR policy packet.

26. The apparatus according to any one of claims 19 to 23, wherein the message is a path computation element protocol PCEP packet.

27. The apparatus according to claim 26, wherein the first indication information is carried in a TLV of SR policy association information in the PCEP packet.

28. A packet processing apparatus, wherein the apparatus is used in a first network device and comprises:
a receiving unit, configured to receive a first message sent by a control entity, wherein the first message comprises a first segment routing policy SR policy and first indication information, the first indication information indicates that a usage of the first SR policy is an SR policy used for being associated, a first forwarding path indicated by the first SR policy is associated with a second forwarding path indicated by a second SR policy, and the second forwarding path comprises the first forwarding path; and
a sending unit, configured to send state information to the control entity based on the first indication information after a binding segment identifier BSID of the first SR policy is successfully applied for, wherein the BSID identifies the first SR policy, and the state information indicates a state of the first SR policy.

29. The apparatus according to claim 28, wherein
the receiving unit is further configured to receive a first service packet sent by a second network device, wherein the first service packet comprises a second segment list in the second SR policy, the second segment list comprises the BSID, and the second network device is a headend of the second SR policy;
the apparatus further comprises a processing unit, wherein
the processing unit is configured to encapsulate, based on the BSID, a first segment list comprised in the first SR policy into the first service packet, to obtain a second service packet; and
the sending unit is further configured to forward the second service packet based on the first segment list.

30. The apparatus according to claim 28 or 29, wherein the apparatus further comprises a processing unit, wherein
the processing unit is configured to skip, based on the first indication information, an operation of reporting an alarm related to the first SR policy.

31. The apparatus according to any one of claims 28 to 30, wherein the receiving unit is specifically configured to:
receive a border gateway protocol BGP SR policy packet sent by the control entity.

32. The apparatus according to any one of claims 28 to 30, wherein the receiving unit is specifically configured to:
receive a path computation element protocol PCEP packet sent by the control entity.

33. The apparatus according to any one of claims 28 to 32, wherein the sending unit is specifically configured to:
send a BGP link state LS packet to the control entity, wherein the BGP LS packet comprises the state information.

34. The apparatus according to claim 33, wherein the BGP LS packet further comprises the second indication information, the second indication information is associated with the first indication information, and the second indication information indicates that the usage of the first SR policy is an SR policy used for being associated.

35. The apparatus according to claim 34, wherein the second indication information is carried in a TLV in SR policy state TLVs in the BGP LS packet.

36. The apparatus according to any one of claims 19 to 35, wherein
the first SR policy is a segment routing on IPv6 policy SRv6 policy; or
the first SR policy is a segment routing on multi-protocol label switching policy SR MPLS policy.

37. A control entity, wherein the control entity comprises a memory and a processor;
the memory is configured to store instructions; and
the processor is configured to execute the instructions in the memory, to perform the method according to any one of claims 1 to 9 or 18.

38. A network device, wherein the network device comprises a memory and a processor;
the memory is configured to store instructions; and
the processor is configured to execute the instructions in the memory, to perform the method according to any one of claims 10 to 18.

39. A communication system, comprising a first network device and a control entity, wherein
the first network device is configured to perform the method according to any one of claims 10 to 18; and
the control entity is configured to perform the method according to any one of claims 1 to 9 or 18.

40. A computer-readable storage medium, comprising instructions, wherein when the instructions are run on a computer, the computer is enabled to perform the method according to any one of claims 1 to 18.
